# FASCICULE DE BREVET EUROPEEN

(11) **EP 2 958 093 B1**
(45) Date de publication et mention de la délivrance du brevet: **16.01.2019**
(21) Numéro de dépôt: 15171677.6
(22) Date de dépôt: 11.06.2015
(51) Int. Cl.: G08C 17/02, H04L 12/28

(54) **PROCÉDÉ DE FONCTIONNEMENT D'UN DISPOSITIF DE COMMANDE PERMETTANT DE MODIFIER UNE REPRÉSENTATION GRAPHIQUE AFFICHÉE EN FONCTION D'UN PARAMÈTRE SÉLECTIONNÉ**
FUNKTIONSVERFAHREN EINER STEUERVORRICHTUNG, DIE EINE ÄNDERUNG EINER ANGEZEIGTEN GRAFISCHEN DARSTELLUNG IN ABHÄNGIGKEIT VON EINEM AUSGEWÄHLTEN PARAMETER ERMÖGLICHT
METHOD FOR OPERATING A CONTROL DEVICE FOR MODIFYING A GRAPHICAL REPRESENTATION DISPLAYED BASED ON A SELECTED PARAMETER

(30) Priorité: 20.06.2014 FR 1455715
(43) Date de publication de la demande: 23.12.2015
(73) Titulaire: SOMFY ACTIVITES SA, 74300 Cluses (FR)
(72) Inventeur: Duchene, Isabelle, 74970 Marignier (FR); Devis, Frédéric, 74330 Epagny (FR)
(74) Mandataire: Novaimo

(56) Documents cités:
- Somfy: "Somfy Domotique: Découvrez TaHoma de Somfy - Solution domotique pour piloter votre maison !", , 5 novembre 2010 (2010-11-05), XP054975583, Extrait de l'Internet: URL:http://www.youtube.com/watch?v=SkdVsLz OxCc [extrait le 2014-10-29]

## Description

### Domaine technique de l'invention

L'invention concerne le domaine de la domotique.

L'invention a pour objet plus particulièrement un procédé de fonctionnement d'un dispositif de commande configuré pour piloter des équipements domotiques d'une installation domotique associée à un bâtiment.

L'invention est aussi relative aux objets suivants :
- un dispositif de commande configuré de telle sorte à être utilisé par le procédé de fonctionnement,
- un support d'enregistrement de données comportant un programme informatique adapté au procédé de fonctionnement,
- un programme informatique adapté au procédé de fonctionnement, et
- une installation domotique comprenant notamment le dispositif de commande.

### État de la technique

Une installation domotique est généralement conçue pour mettre en fonctionnement des équipements domotiques, tels que par exemple des équipements de fermeture, d'occultation ou de protection solaire comprenant un actionneur électromécanique, des équipements d'éclairage, des équipements de chauffage ou de climatisation et/ou un équipement de sécurité anti-intrusion. Ces différents équipements domotiques peuvent être pilotés au travers de données recueillies par des capteurs, tels que par exemple des capteurs de température, de luminosité, de vent, d'humidité, de présence, d'ouverture et/ou de fumée. Les équipements domotiques peuvent également être des prises électriques commandées, sur lesquelles sont branchés des appareils électriques.

Un équipement domotique peut comporter un actionneur électromécanique comprenant un moteur électrique et mettant en mouvement un élément mobile de fermeture, d'occultation ou de protection solaire tel qu'un volet, une porte, une grille, un store, ou tout autre matériel équivalent appartenant audit équipement domotique.

L'installation domotique peut comprendre également un dispositif de commande. Le dispositif de commande peut être muni d'au moins une unité de commande locale, pouvant émettre des ordres à destination de différents équipements, en liaison filaire ou sans fil, de sorte à contrôler les équipements domotiques de l'installation domotique. Les unités de commande locales sont associées respectivement à chacun des équipements domotiques de l'installation domotique. Les équipements domotiques correspondent ainsi à des charges électriques pouvant être commandées à distance.

Le dispositif de commande peut comprendre également un terminal, le terminal comportant un élément d'entrée de données et un élément d'affichage. Le terminal est classiquement une tablette tactile permettant notamment de saisir des données d'entrée pour mettre en fonctionnement les équipements domotiques et d'afficher un état de fonctionnement de ces équipements domotiques.

On connaît déjà des dispositifs de commande d'une installation domotique. Ces dispositifs de commande comprennent un terminal muni d'un élément d'entrée de données et d'un élément d'affichage, l'élément d'affichage ayant un écran de représentation graphique des différents équipements domotiques sous forme d'icônes. Le terminal est, par exemple, un écran tactile qui regroupe de fait l'élément d'entrée de données et l'élément d'affichage. Le dispositif de commande est configuré pour contrôler le fonctionnement des équipements domotiques, en particulier en utilisant des scénarios ou scènes, qui sont un ensemble d'ordres fournis à divers équipements domotiques choisis.

La représentation des équipements domotiques, de leur localisation, des ordres de commande, pose des difficultés de représentation ou de compréhension, aussi bien en mode d'utilisation qu'en mode d'installation, et de nombreuses inventions ont décrit ces problèmes et tenté de les résoudre, notamment à l'aide d'écrans d'affichage avec action tactile et d'icônes simplifiées.

Une telle représentation intuitive des différents équipements domotiques est par exemple réalisée à l'aide du logiciel TaHoma de Somfy, comme divulgué dans la vidéo intitulée "Somfy Domotique: Découvrez TaHoma de Somfy - Solution Domotique pour piloter votre maison !".

En particulier, lorsqu'un utilisateur a la possibilité de programmer des scènes mettant en oeuvre une pluralité d'équipements domotiques, il est nécessaire d'utiliser des menus déroulants ou une pluralité d'écran de configuration afin de programmer notamment les équipements participant à la scène, les ordres qui doivent être donnés et l'horaire auquel la scène doit être mise en oeuvre, etc.

Malgré les progrès apportés par les dispositifs de l'art antérieur, il reste peu aisé pour un utilisateur même familiarisé avec les techniques informatiques d'aborder de manière simple, intuitive et surtout progressive, le monde extrêmement riche en possibilités de l'automatisation des équipements domotiques de la maison.

### Objet de l'invention

Le but de la présente invention est de proposer une solution qui remédie en tout ou partie aux inconvénients listés ci-dessus.

On tend vers ce but grâce à un procédé de fonctionnement d'un dispositif de commande configuré pour piloter des équipements domotiques d'une installation domotique associée à un bâtiment, le dispositif de commande comprenant un élément d'affichage muni d'un écran de représentation graphique dont au moins une partie est affectée à la restitution d'une première représentation graphique symbolisant au moins un des équipements domotiques et un état, notamment souhaité, dudit au moins un des équipements domotiques, ledit procédé comportant une étape d'interaction avec le dispositif de commande comprenant :
- au moins une étape de sélection d'une valeur d'un paramètre conditionnel associé audit état, notamment souhaité,
- une étape de modification de la première représentation graphique de telle sorte à y intégrer un élément graphique fonction de la valeur sélectionnée du paramètre conditionnel,
- une étape d'affichage restituant la première représentation graphique modifiée sur ladite au moins une partie de l'écran.

Avantageusement, l'étape de modification de la première représentation graphique comporte :
- une étape de détermination de l'élément graphique dépendant de ladite valeur du paramètre conditionnel,
- une étape de détermination de la première représentation graphique modifiée dans laquelle est intégré l'élément graphique déterminé sans altérer un symbole graphique de ladite première représentation graphique présent avant modification, ledit symbole graphique étant représentatif de l'état, notamment souhaité, et/ou d'une fonction associée audit état, notamment souhaité.

Préférentiellement, l'étape de sélection de la valeur du paramètre conditionnel est telle que la valeur sélectionnée est une durée dans le temps, une température ou une valeur de photométrie, en particulier une luminance.

Selon une réalisation, l'étape de sélection de la valeur du paramètre conditionnel comprend une étape d'ouverture d'une fenêtre de réglage sur l'écran.

Selon un mode d'exécution, la première représentation graphique modifiée est utilisée dans une étape de configuration d'un scénario ou d'un automatisme comprenant au moins une action dudit au moins un des équipements domotiques associé.

Selon une réalisation, le procédé comporte une étape de génération d'un ordre de commande correspondant en direction dudit au moins un des équipements domotiques en fonction de la valeur sélectionnée du paramètre conditionnel.

De préférence, le procédé comprend une étape d'insertion d'une temporisation entre deux actions d'un scénario ou d'un automatisme. Selon un perfectionnement, l'étape d'affichage est dynamique de telle sorte que le contenu de l'élément graphique varie automatiquement au cours du temps.

Notamment, l'élément graphique intégré à la première représentation graphique par l'étape de modification de la première représentation graphique est une valeur chiffrée.

L'invention est aussi relative à un dispositif de commande (configuré pour contrôler des équipements domotiques d'une installation domotique associée à un bâtiment, ledit dispositif de commande comprenant un élément d'affichage muni d'un écran de représentation graphique dont au moins une partie est affectée à la restitution d'une première représentation graphique symbolisant au moins un des équipements domotiques et un état, notamment souhaité, dudit au moins un des équipements domotiques, ledit dispositif comprenant des éléments matériels et/ou logiciels de mise en oeuvre dudit procédé de fonctionnement tel que décrit, notamment un élément de sélection d'une valeur d'un paramètre conditionnel auquel l'état, notamment souhaité, est associé et un module de traitement graphique permettant d'intégrer un élément graphique, correspondant à ladite valeur sélectionnée, à la première représentation graphique.

Le dispositif peut comporter un terminal comprenant l'élément d'affichage et un élément d'entrée de données, notamment formé par l'écran alors tactile, coopérant avec l'élément de sélection.

De préférence, le terminal est un terminal mobile, en particulier une tablette tactile ou un téléphone mobile multimédia.

L'invention est aussi relative à un support d'enregistrement de données, lisible par un calculateur, sur lequel est enregistré un programme informatique comprenant des éléments de codes de programme informatique de mise en oeuvre des étapes du procédé de fonctionnement tel que décrit.

L'invention est aussi relative à un programme informatique comprenant un élément de code de programme informatique adapté à la réalisation des étapes du procédé de fonctionnement tel que décrit, lorsque le programme tourne sur un ordinateur.

L'invention est aussi relative à une installation domotique pour bâtiment et comprenant des équipements domotiques, notamment placés dans des zones de vie à l'intérieur du bâtiment et/ou à l'extérieur du bâtiment, caractérisée en ce que l'installation domotique comprend un dispositif de commande tel que décrit, un dispositif de communication au travers duquel le dispositif de commande peut piloter les équipements domotiques par mise en oeuvre d'un automatisme programmé comprenant au moins une action relative à un équipement domotique et incluant un paramètre conditionnel associé à l'état, notamment souhaité, de l'équipement domotique.

L'installation peut comprendre une lampe pilotée ou une prise de courant pilotée en tant qu'équipement domotique.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue de principe illustrant une installation domotique selon un mode d'exécution de l'invention,
- la figure 2 est une vue représentant un dispositif de commande,
- la figure 3 illustre schématiquement différentes étapes du procédé de fonctionnement,
- la figure 4 illustre trois icônes de base associées à une lampe auxquelles le procédé n'a pas encore été appliqué,
- la figure 5 illustre les trois icônes de la figure 4 pour chacun desquelles on a appliqué le procédé de fonctionnement,
- les figures 6 et 7 illustrent deux affichages possibles sur l'écran du dispositif de commande.

### Description de modes préférentiels de l'invention

Le procédé décrit ci-après diffère de l'art antérieur en ce qu'il propose d'intégrer à une représentation graphique particulière, associée à un état souhaité d'au moins un équipement domotique, un élément graphique dépendant d'une sélection préalable d'une valeur d'un paramètre conditionnel associé audit état souhaité.

Dans la présente description, les termes « état souhaité » peuvent être remplacés par le terme « état ».

En ce sens, il sera décrit ci après un procédé de fonctionnement d'un dispositif de commande configuré pour piloter des équipements domotiques d'une installation domotique associée à un bâtiment.

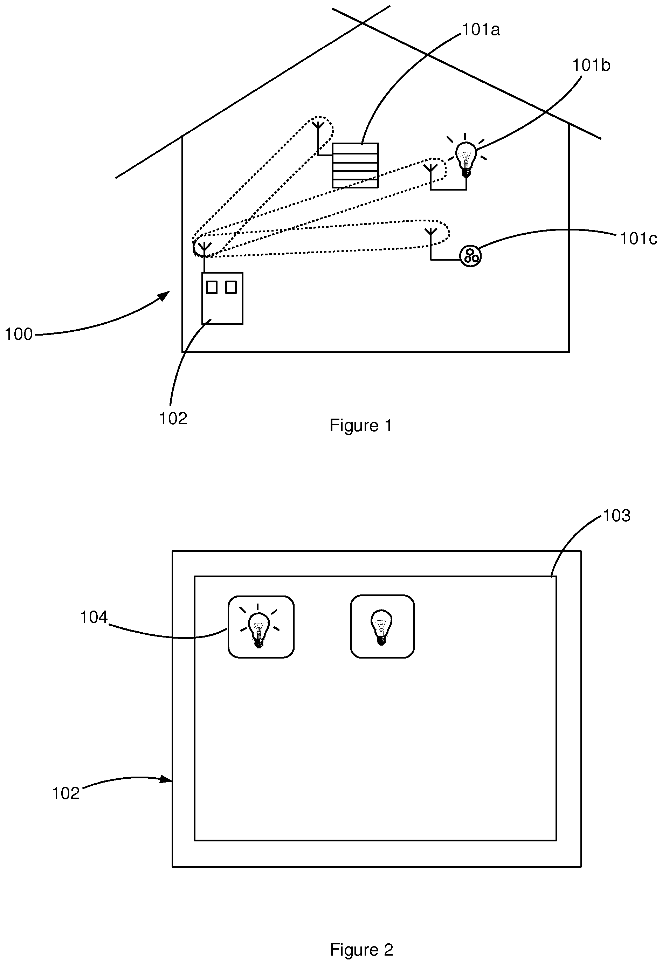

Plus particulièrement comme illustré en figure 1, une installation domotique 100 pour bâtiment peut comprendre des équipements domotiques 101a, 101b, 101c et un dispositif de commande 102 tel qu'il sera décrit dans la présente description.

Dans l'exemple de la figure 1, un équipement domotique peut être un volet roulant piloté 101a ou une lampe 101b pilotée, ou encore une prise de courant pilotée 101c.

Le pilotage des différents équipements domotiques peut se faire via le dispositif de commande 102, notamment en utilisant une communication avec ou sans fil.

En ce sens, le dispositif de commande et les équipements domotiques de l'installation domotique 100 peuvent comporter un dispositif de communication (émetteurs et/ou récepteurs non représentés), au travers desquels ils communiquent, notamment en utilisant un réseau de communication tel que représenté en pointillés à la figure 1. Le dispositif de commande 102 peut piloter les équipements domotiques (101a, 101b, 101c) par l'envoi d'ordres de commande provoquant des actions des équipements domotiques ou par mise en oeuvre d'un scénario ou d'un automatisme programmé comprenant au moins une action relative à un équipement domotique et incluant un paramètre conditionnel associé à l'état souhaité de l'équipement domotique.

Les équipements domotiques et/ou d'éventuels capteurs utilisés dans l'installation domotique peuvent être placés dans des zones de vie à l'intérieur et/ou à l'extérieur du bâtiment.

Dans la présente description, par « automatisme », on entend un ensemble d'au moins une action ou commande exécutable par un équipement domotique et d'au moins une condition d'exécution de cette action ou commande. Cet ensemble peut être généré par une sélection d'icônes ou représentations graphiques représentatives de l'action, de la commande ou de la condition. L'activation de l'automatisme provoque la mise en oeuvre de l'action ou de la commande sous condition.

Dans la présente description, par « scénario », on entend un ensemble d'actions ou commandes exécutables par différents équipements domotiques. Cet ensemble peut être généré par une sélection d'icônes représentatives des équipements domotiques et des actions ou commandes correspondantes. L'activation du scénario provoque la mise en oeuvre des actions ou commandes par les différents équipements domotiques.

De manière plus générale, outre les exemples donnés ci-dessus, les équipements domotiques peuvent être de différents types, comme par exemple :
- des dispositifs de fermeture, d'occultation ou de protection solaire comprenant des dispositifs d'entraînement motorisés mettant en mouvement des écrans ou éléments mobiles entre au moins une première position et une deuxième position ; et/ou
- des dispositifs d'éclairage ; et/ou
- des dispositifs de chauffage ; et/ou
- un dispositif de sécurité anti-intrusion tel qu'une alarme.

Ces équipements domotiques peuvent être commandés en utilisant des données recueillies par des capteurs de l'installation domotique, tels que par exemple des capteurs de température et/ou de luminosité et/ou de vent et/ou d'humidité et/ou de mouvement et/ou de fumée. Les équipements domotiques peuvent eux-mêmes comprendre des capteurs.

Ces équipements domotiques peuvent alternativement, ou complémentairement, être commandés en utilisant des données fournies par une horloge.

Comme illustré en figure 2, le dispositif de commande 102 comprend un élément d'affichage muni d'un écran 103 de représentation graphique dont au moins une partie est affectée à la restitution d'une première représentation graphique 104 symbolisant au moins un des équipements domotiques et un état souhaité dudit au moins un des équipements domotiques. Dans l'exemple particulier de la figure 2, la première représentation graphique est associée à un équipement domotique de type lampe dont l'état souhaité est « allumé ». L'élément d'affichage 103 peut être formé par un afficheur LCD (acronyme du terme anglo-saxon « Liquid Crystal Display ») ou TFT (acronyme du terme anglo-saxon « Thin Film Transistor »).

La première représentation graphique 104 peut être une icône d'action, c'est-à-dire une représentation complète et fonctionnelle d'une action associée à au moins un équipement domotique particulier. Cette représentation graphique peut inclure au moins une information sur le type d'équipement (lampe, prise de courant, volet, etc.), sur son état souhaité, par exemple éteint/allumé/variateur pour le cas d'une lampe.

Il a été décrit une première représentation graphique en association avec un équipement et un état de cet équipement. Il peut aussi y avoir une deuxième représentation graphique associée à d'autres équipements domotiques. En ce sens, la figure 2 illustre aussi une deuxième représentation graphique correspondant à un autre équipement équipement domotique de type éclairage dont l'état souhaité est éteint.

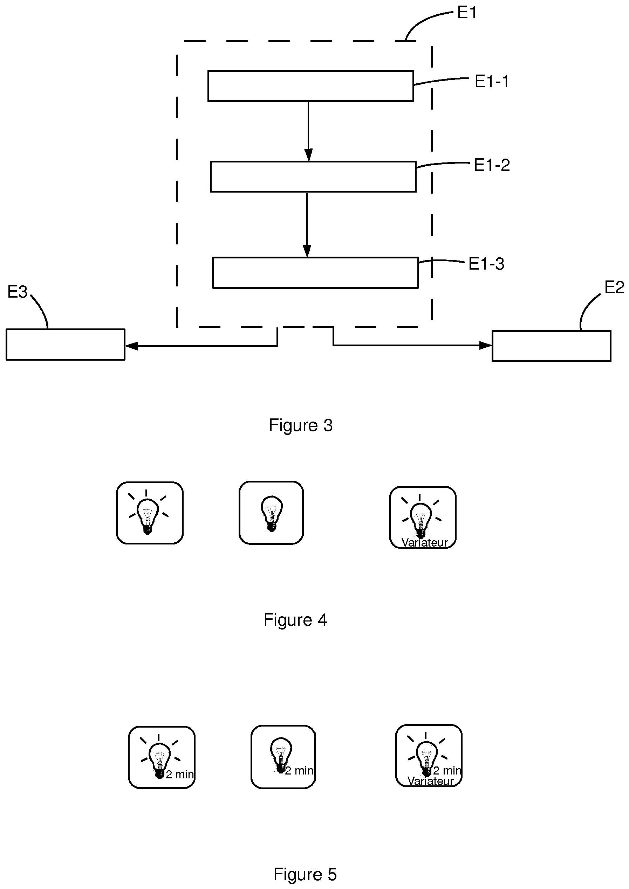

Comme illustré en figure 3, le procédé de fonctionnement du dispositif de commande 102 peut alors comporter une étape d'interaction E1 avec le dispositif de commande 102 comprenant :
- au moins une étape de sélection E1-1 d'une valeur d'un paramètre conditionnel associé audit état souhaité,
- une étape de modification E1-2 de la première représentation graphique de telle sorte à y intégrer un élément graphique fonction de la valeur sélectionnée du paramètre conditionnel,
- une étape d'affichage E1-3 restituant la première représentation graphique modifiée sur ladite au moins une partie de l'écran 103.

L'étape d'interaction peut être réalisée par un utilisateur interagissant avec le dispositif de commande, notamment avec un élément d'entrée de données du dispositif de commande.

L'élément graphique intégré à la première représentation graphique peut être un dessin ou un objet alphanumérique.

De préférence avant l'étape de sélection E1-1, il est réalisé une étape d'affichage de la première représentation graphique avant modification, c'est-à-dire avant adjonction de l'élément graphique correspondant à la valeur sélectionnée du paramètre conditionnel. Ceci permet notamment un paramétrage ergonomique pour un utilisateur en le guidant pas à pas.

On comprend alors qu'au sein d'un même état souhaité on permet audit au moins un équipement d'adopter une configuration particulière correspondant à la valeur sélectionnée du paramètre conditionnel, et que cette configuration est représentée au sein de ladite première représentation graphique modifiée affichée de sorte à permettre un retour d'information à l'utilisateur.

En ce sens, en dehors du simple ajout d'information sur une icône, l'information de paramètre conditionnel est à l'origine d'une configuration particulière adoptée par ledit au moins un équipement domotique, multipliant ainsi les possibilités de personnalisation de l'installation domotique tout en conservant préférentiellement un graphisme de base représentant le type d'équipement domotique et un état souhaité ce cet équipement domotique.

La valeur sélectionnée du paramètre conditionnel permet, par exemple, de déterminer quand l'action associée à l'état souhaité doit être réalisée ou pas.

En particulier pour une même lampe, il est possible de générer trois types d'icônes formant chacune une représentation graphique différente des états souhaités allumé, éteint et variateur (figure 4). En ajoutant une valeur de paramètre conditionnel, par exemple, une durée de minuterie, il est possible de conserver au moins une partie graphique des icônes de base (représentations graphiques de base) tout en générant autant d'icônes que de valeurs possibles du paramètre conditionnel. Ceci est valable même dans le cas où la valeur de paramètre conditionnel n'est pas modifiable, par exemple dans le cas où la durée de minuterie serait fixée à 2 minutes, le nombre d'icônes serait multiplié par deux (icônes de la figure 4 plus ceux de la figure 5) alors que le graphisme de base des représentations graphiques est conservé : les états possibles allumé/éteint/variateur sont conservés, et des états souhaités modifiés par la condition associée (« allumé » avec minuterie 2 min avant extinction, « éteint » avec minuterie 2 min avant allumage, « variateur » avec minuterie 2 min avant extinction) sont ajoutés.

Le fait de préférentiellement conserver le cadre de la première représentation graphique 104 permet également d'assurer une cohérence graphique entre les icônes sans paramètre conditionnel et les icônes avec un paramètre conditionnel, et donc d'éviter des reprogrammations fastidieuses de l'environnement graphique. Cela simplifie également les ressources matérielles et logicielles nécessaires pour la création et l'affichage de ces icônes. Il est préférable pour cela que l'affichage de la valeur de paramètre conditionnel ne modifie pas le format ou le contour de la première représentation graphique.

Dans cette optique, l'étape de modification E2-1 de la première représentation graphique 104 comporte préférentiellement une étape de détermination de l'élément graphique dépendant de ladite valeur du paramètre conditionnel. Cette étape de détermination est préférentiellement réalisée de manière logicielle notamment par la recherche d'une association préalable entre un paramètre conditionnel et d'un élément graphique associé. L'étape de modification E2-1 de la première représentation graphique 104 comporte également une étape de détermination de la première représentation graphique 104 modifiée dans laquelle est intégré l'élément graphique déterminé sans altérer un symbole graphique de ladite première représentation graphique 104 avant modification, ledit symbole étant représentatif de l'état souhaité et/ou d'une fonction associée audit état souhaité. Cette étape de détermination est également préférentiellement réalisée de manière logicielle par création d'une nouvelle représentation graphique basée sur une reproduction partielle de la première représentation graphique ou par modification d'une représentation graphique existante. On comprend alors que quel que soit la valeur du paramètre conditionnel, les premières représentations graphiques modifiées possibles comporteront préférentiellement toujours le même symbole graphique.

Préférentiellement, le symbole graphique représente le type d'équipement domotique et l'état souhaité de cet équipement domotique. Pour chaque valeur possible du paramètre conditionnel, il est possible d'afficher la première représentation graphique 104 modifiée dont l'élément graphique est adapté à ladite valeur du paramètre conditionnel.

Selon un exemple, pour un état souhaité d'un équipement domotique donné, il existe une pluralité d'icônes chacune associée à une valeur correspondante que peut adopter le paramètre conditionnel, et la détermination de la première représentation graphique 104 modifiée consiste à sélectionner une icône adaptée à la valeur sélectionnée du paramètre conditionnel et à remplacer la première représentation graphique courante par l'icône sélectionnée correspondante.

Selon un autre exemple, la première représentation graphique 104 est modifiée par création d'une nouvelle icône en fonction de la valeur sélectionnée du paramètre conditionnel, notamment grâce à un algorithme de retouche graphique de la première représentation graphique 104.

Outre ce qui a été dit ci-avant, le procédé de fonctionnement peut permettre d'ajouter des fonctionnalités/configurations tout en conservant une compatibilité avec les anciens produits, notamment d'anciens dispositifs de commande. L'icône d'action permet une commande directe de l'équipement. Dans un deuxième mode de fonctionnement, la partie d'écran est affectée à l'affichage d'une autre représentation graphique. L'état souhaité de l'équipement représente l'état final résultant d'un ordre de commande. Il n'est pas nécessaire pour cela de connaître l'état ou le statut d'origine de l'équipement. Dans un cas de communication monodirectionnel ce statut d'origine n'est d'ailleurs pas nécessairement connu.

Selon une réalisation, le paramètre conditionnel est une durée dans le temps, une température, une valeur de photométrie, en particulier une luminance ou une couleur de lumière. Le paramètre conditionnel peut également être un horaire, un lieu.

L'exemple le plus marquant est effectivement celui de la minuterie, qui fournit une indication de la durée de maintien de l'équipement domotique concerné dans l'état souhaité, indiqué par la première représentation graphique 104. Selon une autre convention, le paramètre conditionnel est une durée de maintien de l'équipement domotique dans l'état courant avant de passer à l'état souhaité. On obtient ainsi une première représentation graphique modifiée 104, laquelle comprend en superposition au graphisme de la première représentation graphique 104 avant modification, une valeur chiffrée de la durée de minuterie sélectionnée pour cet équipement domotique. L'association d'une minuterie à un état souhaité d'un équipement domotique permet de maintenir cet état souhaité, respectivement un état courant, pendant la durée prévue, puis de changer son état vers un autre état, respectivement l'état souhaité. Ceci évite à un utilisateur de prévoir de programmer manuellement une nouvelle émission d'ordre de changement d'état. Ceci permettrait également de gérer le cas d'une lampe allumée sur détection de présence, en particulier dans le cas d'un automatisme programmé. Le détecteur ne gérant pas la détection d'absence, la lampe ne peut être éteinte par le même biais. Avec le procédé de fonctionnement tel que décrit et dans un automatisme programmé faisant intervenir la représentation graphique modifiée intégrant une valeur de minuterie, à compter d'un certain délai après le premier ordre d'allumage de la lampe, un nouvel ordre d'extinction peut être émis automatiquement. Dans le cas où l'information de durée est transmise à l'équipement domotique concerné, ceci permet de rationnaliser les communications dans un réseau de communication, notamment un réseau radio. En particulier, l'équipement domotique pourrait ainsi changer d'état sans recevoir un nouvel ordre de commande.

Dans le cas où le paramètre conditionnel correspond à une information de luminance, associée à une lampe, cela permet de fournir une représentation graphique modifiée laquelle comprend sur (ou en superposition à) la première représentation graphique, une valeur chiffrée de la luminance seuil à partir de laquelle l'état de l'équipement est modifié. Dans l'exemple de la lampe, un état allumé ne sera maintenu que si la luminance au sein d'une pièce équipée par ladite lampe est inférieure à une première valeur seuil. Inversement, un état éteint ne sera maintenu que si la luminance au sein de ladite pièce est supérieure à la première valeur seuil (ou à une deuxième valeur seuil).

L'invention ne se limite pas à un paramètre conditionnel de type temporel ou de luminance. En ce sens, selon les applications, l'homme du métier pourra choisir tout type de paramètre conditionnel adapté.

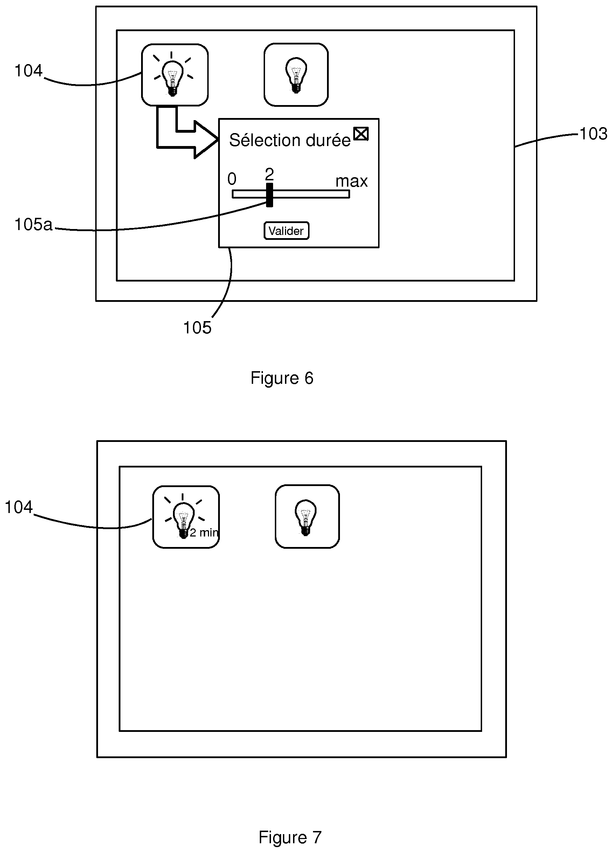

Préférentiellement, l'étape de sélection E1-1 de la valeur du paramètre conditionnel comprend (figure 6) une étape d'ouverture d'une fenêtre de réglage 105 sur l'écran 103. Cette étape d'ouverture de la fenêtre de réglage 105 peut être déclenchée suite à une action particulière d'un utilisateur avec le dispositif de commande 102. A partir de cette fenêtre de réglage 105 un utilisateur pourra sélectionner la valeur souhaitée du paramètre conditionnel en utilisant une interface homme machine adaptée. Par exemple un utilisateur interagit avec le contenu de la fenêtre de réglage 105 en vue de sélectionner la valeur correspondante du paramètre conditionnel via un écran tactile, un clavier, une souris, etc. Par exemple, après validation, on passe de l'affichage de la figure 6 à celui de la figure 7 où la valeur de durée 2 minutes sélectionnée est affichée sur la première représentation graphique 104.

La fenêtre de réglage 105 peut également afficher des éléments de navigation et de validation, permettant de sauvegarder ou d'annuler le paramétrage.

En particulier, l'étape de modification E1-2 de la première représentation graphique 104 peut intervenir par modification et duplication d'une première représentation graphique 104. Par exemple, lorsque la première représentation graphique est sélectionnée, ceci provoque l'ouverture de la fenêtre de réglage 105 de la première représentation graphique 104, permettant de sélectionner un paramètre conditionnel et sa valeur et de valider les choix. Lors de la validation, la fenêtre de réglage 105 se ferme automatiquement et la première représentation graphique est sauvegardée ou dupliquée en une première représentation graphique modifiée. Ces étapes sont réitérées si besoin pour modifier la valeur de paramètre conditionnel ou le paramètre lui-même, ainsi que l'état de l'équipement domotique. La création de nouvelles icônes et la modification d'anciennes icônes est simplifiée et le besoin de ressources logicielles et de mémoire est également limité. Par exemple, la fenêtre de réglage 105 contient un curseur 105a déplaçable entre une position 0 et une position Max (figure 6). Le curseur 105a peut être déplacé manuellement jusqu'à la valeur de paramètre conditionnel souhaité. Par défaut sur toute nouvelle icône utilisée, le curseur 105a est préférentiellement positionné sur la valeur 0. Pour une valeur nulle du paramètre conditionnel, l'icône associée sera celle de la première représentation graphique, sans élément graphique associé.

Selon une mise en oeuvre, la première représentation graphique modifiée est utilisée dans une étape de configuration E2 (figure 1) d'un scénario ou d'un automatisme comprenant au moins une action dudit au moins un des équipements domotiques associé.

Plus particulièrement, la première représentation graphique 104 et la première représentation graphique 104 modifiée, peuvent faire partie d'une liste de choix possibles pour la création de scénarios ou automatismes, mettant en oeuvre un ou plusieurs équipements domotiques. Lorsque la première représentation graphique modifiée 104 est sélectionnée et utilisée dans un automatisme, cela implique qu'au moment où cet automatisme est activé, par exemple parce que l'horaire prévu pour la mise en route de celui-ci correspond à l'heure courante ou parce qu'un utilisateur provoque la mise en route de cet automatisme, l'équipement concerné prend l'état souhaité correspondant à la première représentation graphique, et ce avec les paramètres conditionnels prévus. Avantageusement, la liste des choix possibles est cohérente ergonomiquement, puisque les représentations graphiques modifiées ou non ont préférentiellement un même format (même dimension, même symbole commun, etc.). Le nombre d'icônes dans les listes est ainsi plus restreint et plus facile à parcourir. Les différentes icônes associées à une même représentation graphique peuvent être regroupées automatiquement pour simplifier le choix pour l'utilisateur. Alternativement, la liste des choix ne comprend que les premières représentations graphiques et non les représentations graphiques modifiées, celles-ci étant créées au cours d'une étape ultérieure, par exemple lors de la configuration d'un automatisme. Dans ce cas, un utilisateur configurant un automatisme peut sélectionner à partir de la liste des représentations graphiques celle(s) correspondant à l'équipement domotique et à l'état souhaité pour la mise en oeuvre de l'automatisme, puis copie cette représentation graphique dans une partie d'écran spécifique de création d'automatisme. Par une action sur la représentation graphique copiée, il est possible d'ouvrir la fenêtre de réglage de la première représentation graphique, de sélectionner un paramètre conditionnel et sa valeur avant de valider. La copie de la première représentation graphique est alors changée en première représentation graphique modifiée. Ces étapes sont réitérées si besoin pour inclure dans l'automatisme d'autres équipements et d'autres états souhaités, avec ou sans paramètres conditionnels. La visualisation graphique de l'automatisme configuré est simplifiée.

Alternativement, la première représentation graphique 104 modifiée peut être utilisée pour l'envoi d'un ordre de commande simple. En ce sens, le procédé de fonctionnement peut comporter une étape de génération d'un ordre de commande E3 (figure 1) correspondant en direction dudit au moins un des équipements domotiques en fonction de la valeur sélectionnée du paramètre conditionnel. Cette étape de génération de l'ordre de commande E3 peut être déclenchée à partir du moment où la première représentation graphique modifiée est affichée à l'écran 103 et que l'exécution de l'action associée est validée.

Le procédé de fonctionnement peut comprendre additionnellement une étape d'insertion d'une temporisation entre deux actions d'un scénario ou d'un automatisme. Ainsi, de manière supplémentaire à une minuterie associée à un état souhaité d'un équipement domotique, ceci formant une action d'un automatisme, il est possible de décaler les différentes actions de l'automatisme dans le temps. Ceci permet notamment de combiner des actions d'un automatisme pouvant être soumises à un paramètre conditionnel et d'autres actions pour lesquelles ce paramètre conditionnel n'est pas applicable. En particulier, les lampes ou les appareils électriques branchés sur des prises électriques pilotables à distance pourront être soumis à des paramètres conditionnels, comme une durée de fonctionnement, tandis qu'un actionneur pour un volet roulant ne le pourra pas. En revanche, l'insertion de temporisation entre diverses actions de l'automatisme permettra de décaler dans le temps l'ouverture ou la fermeture d'un volet roulant. Un exemple concret d'application pourrait être un automatisme de réveil en douceur. Une première action de l'automatisme correspond à l'allumage souhaité d'une lampe de chevet, associé à une temporisation de trois minutes. Dans le même automatisme, une deuxième action correspond à l'ouverture souhaitée d'un volet roulant, mais celle-ci est décalée de deux minutes par rapport à l'horaire de lancement de l'automatisme. De ce fait, lors du lancement de l'automatisme, la lampe de chevet s'allume. Deux minutes plus tard, le volet roulant s'ouvre puis la lampe s'éteint une minute après. Il est ainsi possible de gérer dans un même automatisme, des équipements avec des fonctionnements différents, notamment des fonctionnements stables état allumé ou état éteint ou des fonctionnements transitoires (volet ou store en mouvement).

Selon un mode d'exécution particulier, l'étape d'affichage E1-3 est dynamique de telle sorte que le contenu de l'élément graphique varie automatiquement au cours du temps. L'affichage dynamique permet, dans une phase d'exécution d'un automatisme ou d'un ordre de commande d'au moins un équipement domotique, de visualiser l'avancement de l'automatisme ou de comprendre le fonctionnement de celui-ci en temps réel. Une valeur relative correspond à une variation par rapport à la valeur seuil. Dans le cas d'une minuterie, la valeur relative est affichée en tant qu'élément graphique et peut être le temps restant avant la fin de la durée totale.

En ce sens, on peut considérer une phase de fonctionnement suivante : la première représentation graphique a été modifiée en fonction d'une valeur de paramètre conditionnel sélectionnée. La représentation graphique modifiée est alors affichée. Un ordre correspondant à cette représentation graphique modifiée est généré en vue de piloter un équipement domotique. Avant que l'ordre soit effectivement exécuté, ou que la configuration associée à l'état souhaité soit atteinte, la valeur instantanée (valeur relative) du paramètre conditionnel peut évoluer au cours du temps en fonction de la valeur sélectionnée dudit paramètre conditionnel. Ceci est notamment le cas lorsque le paramètre conditionnel est une minuterie : on peut alors afficher en temps réel un décompte en tant qu'élément graphique. C'est le cas plus généralement lorsque l'équipement domotique, dans un état souhaité, aura une certaine inertie pour atteindre une configuration correspondant à la valeur sélectionnée du paramètre conditionnel. On pourra afficher alternativement en tant qu'élément graphique la valeur courante du paramètre conditionnel et la valeur sélectionnée (ceci reviendrait alors à conserver la première représentation graphique au sein de laquelle il y aurait un clignotement représentant alternativement en tant qu'élément graphique la valeur sélectionnée et la valeur courante du paramètre conditionnel).

On aura compris que l'invention est aussi relative au dispositif de commande 102 en tant que tel décrit précédemment. Ce dispositif de commande 102 comporte alors des éléments matériels et/ou logiciels de mise en oeuvre dudit procédé de fonctionnement tel que décrit. Notamment, le dispositif de commande 102 comporte un élément de sélection d'une valeur d'un paramètre conditionnel auquel l'état souhaité est associé, et un module de traitement graphique permettant d'intégrer un élément graphique, correspondant à ladite valeur sélectionnée, à la première représentation graphique.

Le dispositif peut en outre comporter un terminal comprenant l'élément d'affichage et un élément d'entrée de données coopérant avec l'élément de sélection. Notamment, l'écran 103 est tactile, faisant alors office à la fois d'élément d'affichage et d'élément d'entrée de données.

Préférentiellement, le terminal est un terminal mobile, en particulier une tablette tactile ou un téléphone mobile multimédia.

L'invention est aussi relative à un support d'enregistrement de données, lisible par un calculateur, sur lequel est enregistré un programme informatique comprenant des éléments de codes de programme informatique de mise en oeuvre des étapes du procédé de fonctionnement tel que décrit.

L'invention est aussi relative à un programme informatique comprenant un élément de code de programme informatique adapté à la réalisation des étapes du procédé de fonctionnement tel que décrit, lorsque le programme tourne sur un ordinateur.

On comprend de ce qui a été dit ci-dessus que la présente invention permet de rendre plus intuitive l'utilisation d'un dispositif de commande d'un ou de plusieurs équipements domotiques, en particulier dans le cas où un équipement à piloter comprend outre son type et son état, une ou plusieurs fonctions supplémentaires programmables.

De manière applicable à tout ce qui a été dit précédemment, l'étape de modification de la première représentation graphique de telle sorte à y intégrer un élément graphique fonction de la valeur sélectionnée du paramètre conditionnel peut être telle que l'élément graphique est une valeur chiffrée. Cette valeur chiffrée peut être un pourcentage, un temps, etc. On comprend alors que l'étape de sélection peut par exemple permettre de directement sélectionner dans une boîte de dialogue adaptée ladite valeur chiffrée, ou l'étape de sélection peut être telle que la valeur sélectionnée n'est pas directement chiffrée mais que le procédé élabore une valeur chiffrée à partir de la valeur du paramètre conditionnel sélectionné.

## Revendications

1. Procédé de fonctionnement d'un dispositif de commande (102) configuré pour piloter des équipements domotiques (101a, 101b, 101c) d'une installation domotique (100) associée à un bâtiment, le dispositif de commande (102) comprenant un élément d'affichage muni d'un écran (103) de représentation graphique dont au moins une partie est affectée à la restitution d'une première représentation graphique (104) symbolisant au moins un des équipements domotiques et un état dudit au moins un des équipements domotiques, **caractérisé en ce qu'**il comporte une étape d'interaction (E1) avec le dispositif de commande (102) comprenant :
- au moins une étape de sélection (E1-1) d'une valeur d'un paramètre conditionnel associé audit état,
- une étape de modification (E1-2) de la première représentation graphique de telle sorte à y intégrer un élément graphique fonction de la valeur sélectionnée du paramètre conditionnel,
- une étape d'affichage (E1-3) restituant la première représentation graphique modifiée sur ladite au moins une partie de l'écran (103).

2. Procédé selon la revendication 1, **caractérisé en ce que** l'étape de modification (E1-2) de la première représentation graphique comporte :
- une étape de détermination de l'élément graphique dépendant de ladite valeur du paramètre conditionnel,
- une étape de détermination de la première représentation graphique modifiée dans laquelle est intégré l'élément graphique déterminé sans altérer un symbole graphique de ladite première représentation graphique présent avant modification, ledit symbole graphique étant représentatif de l'état et/ou d'une fonction associée audit état.

3. Procédé de fonctionnement selon l'une des revendications précédentes, **caractérisé en ce que** l'étape de sélection (E1-1) de la valeur du paramètre conditionnel est telle que la valeur sélectionnée est une durée dans le temps, une température ou une valeur de photométrie, en particulier une luminance.

4. Procédé de fonctionnement selon l'une des revendications précédentes, **caractérisé en ce que** l'étape de sélection de la valeur du paramètre conditionnel comprend une étape d'ouverture d'une fenêtre de réglage (105) sur l'écran (103).

5. Procédé de fonctionnement selon l'une des revendications précédentes, **caractérisé en ce que** la première représentation graphique modifiée est utilisée dans une étape de configuration (E2) d'un scénario ou d'un automatisme comprenant au moins une action dudit au moins un des équipements domotiques associé.

6. Procédé de fonctionnement selon l'une quelconque des revendications précédentes, **caractérisé en ce qu'**il comporte une étape de génération d'un ordre de commande (E3) correspondant en direction dudit au moins un des équipements domotiques en fonction de la valeur sélectionnée du paramètre conditionnel.

7. Procédé de fonctionnement selon la revendication précédente, **caractérisé en ce qu'**il comprend une étape d'insertion d'une temporisation entre deux actions d'un scénario ou d'un automatisme.

8. Procédé selon l'une des revendications précédentes, caractérisé en ce l'étape d'affichage (E1-3) est dynamique de telle sorte que le contenu de l'élément graphique varie automatiquement au cours du temps.

9. Procédé selon l'une quelconque des revendications précédentes, **caractérisé en ce que** l'élément graphique intégré à la première représentation graphique par l'étape de modification (E1-2) de la première représentation graphique est une valeur chiffrée.

10. Dispositif de commande (102) configuré pour contrôler des équipements domotiques (101a, 101b, 101c) d'une installation domotique (100) associée à un bâtiment, ledit dispositif de commande (102) comprenant un élément d'affichage muni d'un écran (103) de représentation graphique dont au moins une partie est affectée à la restitution d'une première représentation graphique (104) symbolisant au moins un des équipements domotiques (101a, 101b, 101c) et un état dudit au moins un des équipements domotiques (101a, 101b, 101c), **caractérisé en ce qu'**il comprend des éléments matériels et/ou logiciels de mise en oeuvre dudit procédé de fonctionnement selon l'une quelconque des revendications précédentes, notamment un élément de sélection d'une valeur d'un paramètre conditionnel auquel l'état est associé et un module de traitement graphique permettant d'intégrer un élément graphique, correspondant à ladite valeur sélectionnée, à la première représentation graphique.

11. Dispositif selon la revendication précédente, **caractérisé en ce qu'**il comporte un terminal comprenant l'élément d'affichage et un élément d'entrée de données, notamment formé par l'écran (103) alors tactile, coopérant avec l'élément de sélection.

12. Dispositif selon la revendication précédente, **caractérisé en ce que** le terminal est un terminal mobile, en particulier une tablette tactile ou un téléphone mobile multimédia.

13. Support d'enregistrement de données, lisible par un calculateur, sur lequel est enregistré un programme informatique comprenant des éléments de codes de programme informatique de mise en oeuvre des étapes du procédé de fonctionnement selon l'une des revendications 1 à 9.

14. Programme informatique comprenant un élément de code de programme informatique adapté à la réalisation des étapes du procédé de fonctionnement selon l'une des revendications 1 à 9, lorsque le programme tourne sur un ordinateur.

15. Installation domotique (100) pour bâtiment et comprenant des équipements domotiques, notamment placés dans des zones de vie à l'intérieur du bâtiment et/ou à l'extérieur du bâtiment, **caractérisée en ce que** l'installation domotique comprend un dispositif de commande selon l'une des revendications 10 à 12, un dispositif de communication au travers duquel le dispositif de commande (102) peut piloter les équipements domotiques (101a, 101b, 101c) par mise en oeuvre d'un automatisme programmé comprenant au moins une action relative à un équipement domotique (101a, 101b, 101c) et incluant un paramètre conditionnel associé à l'état de l'équipement domotique (101a, 101b, 101c).

16. Installation domotique selon la revendication précédente, **caractérisée en ce qu'**elle comprend une lampe pilotée (101b) ou une prise de courant pilotée (101) en tant qu'équipement domotique.

## Patentansprüche

1. Funktionsverfahren einer Steuervorrichtung (102), die eingerichtet ist, um Haustechnikausrüstungen (101a, 101b, 101c) einer Haustechnikanlage (100), die einem Gebäude zugeordnet ist, zu steuern, wobei die Steuervorrichtung (102) ein Anzeigeelement umfasst, das mit einem Bildschirm (103) zur grafischen Darstellung versehen ist, von dem mindestens ein Teil der Wiedergabe einer ersten grafischen Darstellung (104) zugewiesen ist, die mindestens eine der Haustechnikausrüstungen und einen Zustand der mindestens einen der Haustechnikausrüstungen symbolisiert, **dadurch gekennzeichnet, dass** es einen Schritt der Interaktion (E1) mit der Steuervorrichtung (102) umfasst, umfassend:
- mindestens einen Schritt der Auswahl (E1-1) eines Werts eines dem Zustand zugeordneten Bedingungsparameters,
- einen Schritt der Änderung (E1-2) der ersten grafischen Darstellung, um in diese ein grafisches Element zu integrieren, das von dem ausgewählten Wert des Bedingungsparameters abhängt,
- einen Schritt der Anzeige (E1-3), der die erste geänderte grafische Darstellung auf dem mindestens einen Teil des Bildschirms (103) wiedergibt.

2. Verfahren nach Anspruch 1, **dadurch gekennzeichnet, dass** der Schritt der Änderung (E1-2) der ersten grafischen Darstellung umfasst:
- einen Schritt der Bestimmung des grafischen Elements, das von dem Wert des Bedingungsparameters abhängt,
- einen Schritt der Bestimmung der ersten geänderten grafischen Darstellung, in die das bestimmte grafische Element integriert wird, ohne ein grafisches Symbol der ersten grafischen Darstellung, das vor der Änderung vorhanden ist, zu beeinträchtigen, wobei das grafische Symbol für den Zustand und/oder eine dem Zustand zugeordnete Funktion repräsentativ ist.

3. Funktionsverfahren nach einem der vorhergehenden Ansprüche, **dadurch gekennzeichnet, dass** der Schritt der Auswahl (E1-1) des Werts des Bedingungsparameters derart ist, dass der ausgewählte Wert eine Zeitdauer, eine Temperatur oder ein Fotometriewert, insbesondere eine Leuchtdichte, ist.

4. Funktionsverfahren nach einem der vorhergehenden Ansprüche, **dadurch gekennzeichnet, dass** der Schritt der Auswahl des Werts des Bedingungsparameters einen Schritt des Öffnens eines Einstellfensters (105) auf dem Bildschirm (103) umfasst.

5. Funktionsverfahren nach einem der vorhergehenden Ansprüche, **dadurch gekennzeichnet, dass** die geänderte erste grafische Darstellung in einem Schritt der Konfiguration (E2) eines Szenarios oder eines Automatismus verwendet wird, umfassend mindestens eine Aktion der mindestens einen der zugehörigen Haustechnikausrüstungen.

6. Funktionsverfahren nach einem der vorhergehenden Ansprüche, **dadurch gekennzeichnet, dass** es einen Schritt der Erzeugung eines entsprechenden Steuerbefehls (E3) in Richtung der mindestens einen der Haustechnikausrüstungen in Abhängigkeit von dem ausgewählten Wert des Bedingungsparameters umfasst.

7. Funktionsverfahren nach dem vorhergehenden Anspruch, **dadurch gekennzeichnet, dass** es einen Schritt des Einsetzens einer Verzögerung zwischen zwei Aktionen eines Szenarios oder eines Automatismus umfasst.

8. Verfahren nach einem der vorhergehenden Ansprüche, **dadurch gekennzeichnet, dass** der Anzeigeschritt (E1-3) dynamisch ist, so dass der Inhalt des grafischen Elements automatisch mit der Zeit variiert.

9. Verfahren nach einem der vorhergehenden Ansprüche, **dadurch gekennzeichnet, dass** das grafische Element, das in die erste grafische Darstellung durch den Schritt der Änderung (E1-2) der ersten grafischen Darstellung integriert wird, ein Zahlenwert ist.

10. Steuervorrichtung (102), die eingerichtet ist, um Haustechnikausrüstungen (101a, 101b, 101c) einer Haustechnikanlage (100), die einem Gebäude zugeordnet ist, zu steuern, wobei die Steuervorrichtung (102) ein Anzeigeelement umfasst, das mit einem Bildschirm (103) zur grafischen Darstellung versehen ist, von dem mindestens ein Teil der Wiedergabe einer ersten grafischen Darstellung (104) zugewiesen ist, die mindestens eine der Haustechnikausrüstungen (101a, 101b, 101c) und einen Zustand der mindestens einen der Haustechnikausrüstungen (101a, 101b, 101c) symbolisiert, **dadurch gekennzeichnet, dass** sie Hardware- und/oder Software-Elemente zum Einsatz des Funktionsverfahrens nach einem der vorhergehenden Ansprüche umfasst, insbesondere ein Element zur Auswahl eines Werts eines Bedingungsparameters, dem der Zustand zugeordnet ist, und ein grafisches Bearbeitungsmodul, das es ermöglicht, ein grafisches Element entsprechend dem ausgewählten Wert in die erste grafische Darstellung zu integrieren.

11. Vorrichtung nach dem vorhergehenden Anspruch, **dadurch gekennzeichnet, dass** sie ein Endgerät umfasst, umfassend das Anzeigeelement und ein Dateneingabeelement, das insbesondere von dem Bildschirm (103), nun Touchscreen, gebildet ist, der mit dem Auswahlelement zusammenwirkt.

12. Vorrichtung nach dem vorhergehenden Anspruch, **dadurch gekennzeichnet, dass** das Endgerät ein mobiles Endgerät ist, insbesondere ein Tablet oder ein Smartphone.

13. Datenaufzeichnungsträger, der von einem Rechner lesbar ist, auf dem ein Informatikprogramm aufgezeichnet ist, umfassend Informatikprogrammcodeelemente für den Einsatz der Schritte des Funktionsverfahrens nach einem der Ansprüche 1 bis 9.

14. Informatikprogramm, umfassend ein Informatikprogrammcodeelement, das für die Durchführung der Schritte des Funktionsverfahrens nach einem der Ansprüche 1 bis 9 geeignet ist, wenn das Programm auf einem Computer läuft.

15. Haustechnikanlage (100) für ein Gebäude und umfassend Haustechnikausrüstungen, die insbesondere in Lebensbereichen im Inneren des Gebäudes und/oder außerhalb des Gebäudes angeordnet sind, **dadurch gekennzeichnet, dass** die Haustechnikanlage eine Steuervorrichtung nach einem der Ansprüche 10 bis 12, eine Kommunikationsvorrichtung, über die die Steuervorrichtung (102) die Haustechnikausrüstungen (101a, 101b, 101c) durch Einsatz eines programmierten Automatismus steuern kann, umfassend mindestens eine Aktion in Zusammenhang mit einer Haustechnikanlage (101a, 101b, 101c), und einschließend einen Bedingungsparameter, der dem Zustand der Haustechnikanlage (101a, 101b, 101c) zugeordnet ist.

16. Haustechnikanlage nach dem vorhergehenden Anspruch, **dadurch gekennzeichnet, dass** sie eine gesteuerte Lampe (101b) oder eine gesteuerte Steckdose (101) als Haustechnikausrüstung umfasst.

## Claims

1. Operating method for a control device (102) configured to drive home automation appliances (101a, 101b, 101c) of a home automation installation (100) associated with a building, the control device (102) comprising a display element equipped with a graphical display screen (103) at least one portion of which is assigned to rendering a first graphical depiction (104) symbolizing at least one of the home automation appliances and a state of said at least one of the home automation appliances, **characterized in that** it includes a step of (E1) of interacting with the control device (102), comprising:
- at least one step (E1-1) of selecting a value of a conditional parameter associated with said state,
- a step (E1-2) of modifying the first graphical depiction so as to integrate into it a graphical element dependent on the selected value of the conditional parameter,
- a display step (E1-3) of rendering the modified first graphical depiction on said at least one portion of the screen (103).

2. Method according to Claim 1, **characterized in that** the step (E1-2) of modifying the first graphical depiction includes:
- a step of determining the graphical element depending on said value of the conditional parameter,
- a step of determining the modified first graphical depiction into which the determined graphical element is integrated without changing a graphical symbol of said first graphical depiction that is present prior to modification, said graphical symbol being representative of the state and/or of a function associated with said state.

3. Operating method according to either of the preceding claims, **characterized in that** the step (E1-1) of selecting the value of the conditional parameter is such that the selected value is a time period, a temperature or a photometry value, in particular a luminance.

4. Operating method according to one of the preceding claims, **characterized in that** the step of selecting the value of the conditional parameter comprises a step of opening a settings window (105) on the screen (103).

5. Operating method according to one of the preceding claims, **characterized in that** the modified first graphical depiction is used in a step (E2) of configuring a scenario or an automation comprising at least one action of said associated at least one of the home automation appliances.

6. Operating method according to any one of the preceding claims, **characterized in that** it includes a step (E3) of generating a corresponding control order in the direction of said at least one of the home automation appliances depending on the selected value of the conditional parameter.

7. Operating method according to the preceding claim, **characterized in that** it comprises a step of inserting a delay between two actions of a scenario or of an automation.

8. Method according to one of the preceding claims, **characterized in that** the display step (E1-3) is dynamic, such that the content of the graphical element varies automatically over time.

9. Method according to any one of the preceding claims, **characterized in that** the graphical element integrated into the first graphical depiction by the step (E1-2) of modifying the first graphical depiction is a numerical value.

10. Control device (102) configured to monitor home automation appliances (101a, 101b, 101c) of a home automation installation (100) associated with a building, said control device (102) comprising a display element equipped with a graphical display screen (103) at least one portion of which is assigned to rendering a first graphical depiction (104) symbolizing at least one of the home automation appliances (101a, 101b, 101c) and a state of said at least one of the home automation appliances (101a, 101b, 101c), **characterized in that** it comprises hardware elements and/or software elements for implementing said operating method according to any one of the preceding claims, in particular an element for selecting a value of a conditional parameter with which the state is associated and a graphical processing module for integrating a graphical element, corresponding to said selected value, into the first graphical depiction.

11. Device according to the preceding claim, **characterized in that** it includes a terminal comprising the display element and a data entry element, in particular formed by the screen (103) which is then a touchscreen, interacting with the selection element.

12. Device according to the preceding claim, **characterized in that** the terminal is a mobile terminal, in particular a touchscreen tablet or a multimedia mobile telephone.

13. Computer-readable data recording medium on which there is recorded a computer program comprising computer program code elements for implementing the steps of the operating method according to one of Claims 1 to 9.

14. Computer program comprising a computer program code element designed to perform the steps of the operating method according to one of Claims 1 to 9 when the program runs on a computer.

15. Home automation installation (100) for a building and comprising home automation appliances, in particular situated in living areas inside the building and/or outside the building, **characterized in that** the home automation installation comprises a control device according to one of Claims 10 to 12, a communication device by way of which the control device (102) is able to drive the home automation appliances (101a, 101b, 101c) by implementing a programmed automation comprising at least one action in relation to a home automation appliance (101a, 101b, 101c), and including a conditional parameter associated with the state of the home automation appliance (101a, 101b, 101c).

16. Home automation installation according to the preceding claim, **characterized in that** it comprises a driven light (101b) or a driven power outlet (101) as home automation appliance.
